# EUROPEAN PATENT SPECIFICATION

(11) **EP 1 190 187 B1**
(45) Date of publication and mention of the grant of the patent: **12.02.2003**
(21) Application number: 00942540.6
(22) Date of filing: 15.06.2000
(51) Int. Cl.: F16H 15/38, C22C 38/18, C22C 38/22

(54) **CVT/IVT COMPONENT**
CVT/IVT BESTANDTEIL
COMPOSANT CVT/IVT

(30) Priority: 18.06.1999 NL 1012391
(43) Date of publication of application: 27.03.2002
(73) Proprietor: SKF Engineering & Research Centre B.V., 3430 DT Nieuwegein (NL)
(72) Inventor: BESWICK, John, Michael, NL-3417 WX Montfoort (NL); IOANNIDES, Eustathios, NL-3706 TB Zeist (NL)
(74) Representative: Jorritsma, Ruurd
(86) International application number: NL0000417
(87) International publication number: WO00079151

(56) References cited:
- EP-A- 0 571 667
- US-A- 5 352 303
- US-A- 5 672 014
- PATENT ABSTRACTS OF JAPAN vol. 1997, no. 07, 31 July 1997 (1997-07-31) -& JP 09 079338 A (KOBE STEEL LTD;NISSAN MOTOR CO LTD), 25 March 1997 (1997-03-25)

## Description

The invention relates to a CVT/IVT component comprising a race way contacting in operation the race way of a further CVT/IVT-component. CVT/IVT transmission comprise disks and power rollers wherein the position of a disk with regard two opposite rollers determines the transmission ratio. Between the disks and the rollers there is a sliding contact condition, comprising both vibratory and slide loadings.

This loading is completely different from the loadings to which other items with race ways such as rolling bearings are subjected. In contrast to rolling bearings there is no roller loading, but a sliding condition.

In the prior art it is suggested to use ASTM A295 52100 steel for parts of a CVT/IVT transmission. However, it has been found that such a steel has insufficient contact fatigue strength whilst its toughness is also insufficient to guarantee prolonged service life as is required in the automotive industry.

In the closest prior art of PATENT ABSTRACTS OF JAPAN vol. 1997, no. 07, 31 July 1997 (JP 09 079338 A, KOBE STEEL LTD; NISSAN MOTOR CO LTD) is disclosed a CVT/IVT-component comprising a raceway contacting in operation the race way of a further CVT/IVT-component, **wherein** said component comprises a steel including a certain wt%of C, Si , Mn , Fe and unavoidable impurities. This known steel used for CVT/IVT-component has the content of 0.1-0.6 wt% C, 0.05-1.5 wt% Si, 0.2-2.0 wt% Mn, 0.03-1.0 wt% V and moreover other alloying elements such as Al and Ti. On this steel is applied a carbonitriding treatment first at a temperature of 920°C followed then by a temperature of 840°C with a cooling to 80 °C and then followed by a tempering process.

The invention aims to provide a steel for CVT/IVT disk and power rollers components which is particularly resistant to sliding contact fatique failure.

According to the invention this aim is realised in that that said component comprises a steel consisting of 0.85-0.95 wt % C, up to 0.15 wt.% Si, 0.25 - 0.45 wt% Mn, 1.30 - 1.50 wt% Cr, 0.20-0.40 wt %. Mo and for the rest iron and unavoidable impurities.

From EP 0 349 023 such a steel is known to be used for rolling bearings. This steel is generally referred to as SKF 3M steel. Surprisingly, according to the invention, it has been found that the sliding resistance of this steel, which is of no importance in roller bearing applications, is excellent with regard to other steels, such as ASTM A 295 52100.

To obtain optimum properties for both the core and the surface of the CVT/IVT component according to a preferred embodiment of the invention, carbonitriding is proposed . For such a treatment the surface structure can comprise a highly alloyed martensite. As a result the static capacity, fatigue strength for sliding contact and wear resistance are improved.

Any carbonitriding process known in the art can be used to this end. However, preferably, a process is used wherein the steel is exposed from 1-10 hours at a temperature between 780 and 900°C to an atmosphere of which the composition is such that the carbon activity (a_{c}) is between 0.90 and 1.10 and having a nitrogen potential Nₚₒₜ in balance with the atmosphere, if measured directly on the surface, of 0.1-0.5% by weight N because of the atmosphere used comprising at least carbon monoxide, hydrogen and ammonia.

The thermal treatment according to the invention produces an enrichment of the surface with carbon and nitrogen. No cementite is produced at or near the surface of the steel as is normally observed in carbonitriding of ordinary rolling bearing steels, such as ASTM A295 52100. As a result of the process according to the invention, the grain size of the austenite remains small owing to the precipitation and growth of fine residual carbides. As a result of quenching after carbonitriding, a fine-grained martensite having a high strength is produced. Since the surface is enriched with austenite-strengthening elements, the temperature at with the martensite is produced is lower at the surface during quenching than in the prior art. The surface enrichment causes the shear strenght of the austenite to increase, so that larger undercooling is necessary, the temperature at which the martensite is produced consequently being lower. Moreover, the compressive stress at the surface becomes larger, as a result of which the stress encountered in operation decreases and the service life is prolonged. This involves a conventional heat treatment.

It is preferred to realise carbonitriding between 800 and 850°C during the 3-5 hours and with a carbon activity of about 1.0.

In particular the added carbonitriding atmosphere comprises 17-25 % by volume of carbon monoxide, 30-45 % by volume hydrogen, and 1-10% by volume ammonia. The amount of ammonia used depends to a considerable extent on the furnace in which the carbonitriding is carried out and the other process parameters.

Preferably, either or both disks and rollers are made from a steel as described above.

The micro structure of a 3M steel carbonitrided according to the invention at the surface of an CVT/IVT disk or power roller component will comprise 0-35 vol.% retained austenite. The actual volume is dependent on the high temperature requirements. This obtained austenite is included in a plate martensite structure wherein the prior austenite grain size is 15 µm maximum. Residual carbides are present having a maximum 4 µm equivalent diameter and a volume fraction of 30% max.

The invention will be further elucidated referring to the drawings wherein
fig. 1 shows an example of a CVT/IVT;
fig. 2a, b show the toughness improvements realised by the steel according to the invention, and
fig. 3 shows inner ring bearing lives in contaminant bearing tests.

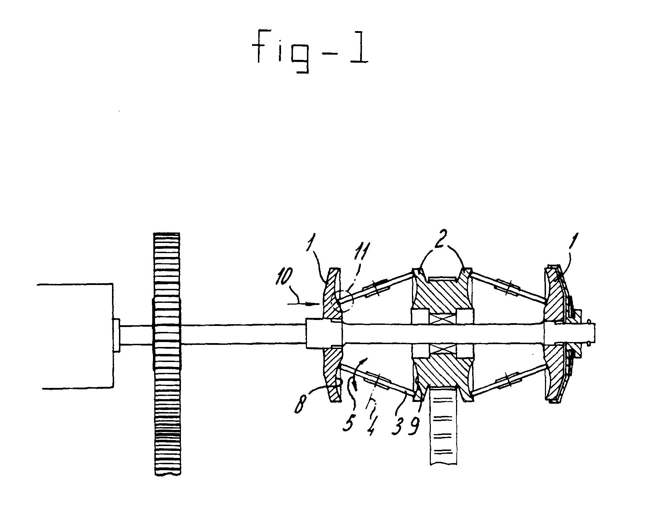

In fig. 1 an example of an CVT/IVT is given. In the most general embodiment the CVT/IVT comprises input disks 1 connected to the output shaft of an engine and an opposed output disk 2 connected to a drive chain or further gear box components of a vehicle or any other item which has to be driven with a variable ratio. In between are a number of power rollers 3. Power rollers 3 can be journalled on any shaft and the axis thereof is indicated by 4. This shaft can make a rotational movement in the sense of arrow 5. Through rotation of other rollers in the sense of arrow 5 the transmission ratio between the input and output disk will change. As shown in fig. 1 power roller 3 engages the input disk near its centre line whilst the output disk is engaged remote from this centre line. There is a pressure force clamping the circumferential surface of the power rollers to the raceway 8 of the input disk and the raceway 9 of the output disk respectively. This clamping force is schematically referred to by arrows 10. The CVT/IVT shown in fig. 1 is also known as Torotrak IVT'. Other means are also used in the art but for all embodiments it is essential that at least three power rollers are provided which make some tilting movement according to arrow 5 in order to change the ratio of transmission between an input and an output disk. It has been shown that such structure can give a 15% increased efficiency as compared to conventional automatic transmissions. In contrast to rolling bearing there is no lubrication film between the adjacent components of the structure.

The circumferential surface of each power roller as well as the raceways 8 and 9 are subjected to considerable loadings. Probably this is one of the reasons that up to now this technique was not generally accepted. For example, the maximum contact stress between the circumferential surface of the power rollers and the related raceway could be as high as 4 GPa. This is far higher than the contact pressure encountered in usual rolling bearings. Furthermore, the tilting movement according to arrow 5 introduces slip of the rollers relative to the disks. Such a slip is not present in rolling bearings. Fatigue cracking and fracture due to repetitive bending stresses have been reported. The area of the disk within circle 11 is particular vulnerable. This means that the combined rolling contact fatigue strength of the traction surfaces (raceways) and fatigue fracture strength should be improved. Below a very schematic overview of the loading of the several components of the CVT/IVT transmission is given.

| **IVT-Components** | **∼ Characteristics** | **Failure Mode** |
|---|---|---|
| Input Disk-Sline Connection | Torsional load at spline radii | Structural fatigue cracking |
| Input disk against power roller via traction fluid to stop slippage | Up to ∼3.5 GPa contact pressure | •Rolling contact fatigue spalling •Surface distress •Structural load accelerated contact fatigue |
| Power rollers | Up to ∼3.5 GPa contact pressure | •Rolling contact fatigue spalling •Surface distress |
| Significant clamping forces across disk & power rollers via hydraulic piston | Bending structural stress | Structural fatigue cracking |
| Drive disk via chain sprocket | Bending forces at output drive | Bending fatigue cracks |
| Disk & power rollers | High temperatures (up to ∼ 120.°C) and structural stresses | Growth & axial clearance increase |
| Disk & power rollers | Vibratory loads | Accelerated structural fatigue cracking |

In order to meet this requirements it is suggested according to the invention to use a steel comprising 0.85-0.95 wt.% carbon, 0.15 wt.% silicon max; 0.25-.0.45 wt % manganese, 1.30-1.50 chromium and 0.20-0.40 molydenum.

If such a steel, as described above, is used, it has surprisingly been found that the toughness of IVT/CVT disks and power roller components is considerably increased.

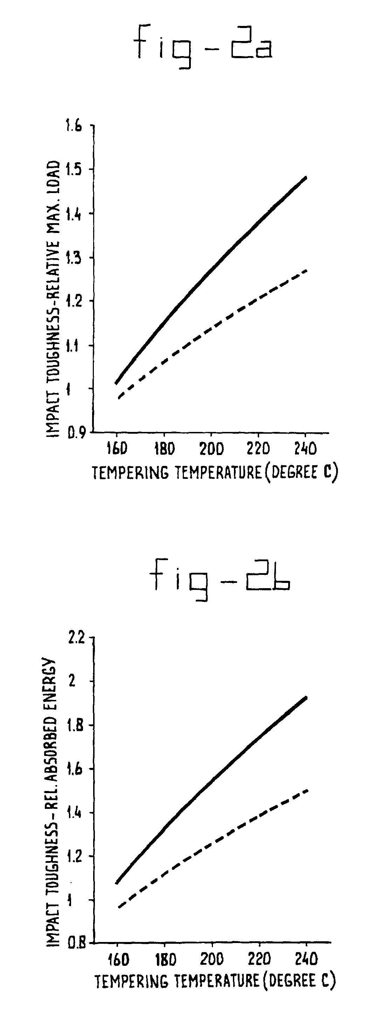

Fig. 2a and b show the toughness increase. In those figures the dotted line represents the value of ASTM A295 52100 steel whilst the continuous line relates to the steel according to the invention.

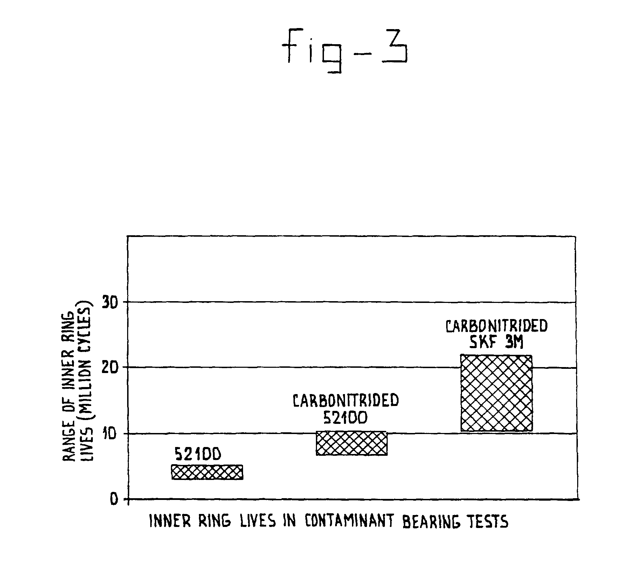

Fig. 3 shows the L₁₀ inner ring bearing lives in a 6305 rolling bearing run-in contaminant bearing tests. The increased ring life of carbonitrided SKF 3M steel is clear from this figure.

From the above it is clear that through the use of a special purity steel being further alloyed preferably in combination with strengthening of the surface of the component made therefrom by carbonitriding, the contact fatigue strength can significantly be improved.

## Claims

1. CVT/IVT component comprising a race way contacting in operation the race way of a further CVT/IVT-component **characterised in that**, said component comprises a steel consisting of:
0.85- 0.95 wt% C,
up to 0.15 wt. % Si,
1.30 - 1.50 wt % Cr;
0.25-0.45 wt% Mn;
0.20-0.40 wt.% Mo and
for the rest iron and unavoidable impurities.

2. CVT/IVT component according to one of the preceding claims, being carbonitrided.

3. CVT/IVT component according to one of the preceding claims wherein the surface structure comprises a plate martensite structure having 0-35 vol.% retained austenite and 0-30 vol.% residual carbide.

4. CVT/IVT component according to claim 3, wherein the residual carbide has a maximum equivalent diameter of 4 µm.

5. CVT/IVT component according to claim 3 or 4, wherein the prior austenite has grain size of 15 µm max.

6. CVT/IVT component according to one of the preceding claims, wherein said component comprises a CVT/IVT disk.

7. CVT/IVT component according to one of the preceding claims, wherein said component comprises a CVT/IVT roller.

## Patentansprüche

1. CVT/IVT-Bestandteil aufweisend eine Laufbahn, welche im Betrieb eine Laufbahn eines weiteren CVT/IVT-Bestandteils kontaktiert, **dadurch gekennzeichnet, dass** der Bestandteil einen Stahl aufweist, bestehend aus:
0,85 - 0,95 Gew.% C,
bis zu 0,15 Gew.% Si,
1,30 - 1,50 Gew.% Cr;
0,25 - 0,45 Gew.% Mn;
0,20 - 0,40 Gew.% Mo und
für den Rest Eisen und unvermeidbare Verunreinigungen.

2. CVT/IVT-Bestandteil gemäß einem der vorangehenden Ansprüche, welcher carabonitriert ist.

3. CVT/IVT-Bestandteil gemäß einem der vorhergehenden Ansprüche, wobei die Oberflächenstruktur eine plattierte Martensit-Struktur aufweist, welche 0 - 35 Vol.% Abschreck-Austenit und 0 - 30 Vol.% Rest: carbid aufweist.

4. CVT/IVT-Bestandteil gemäß Anspruch 3, wobei der Rest carbid einen maximalen äquivalenten Kreisdurchmesser von 4 µm aufweist.

5. CVT/IVT-Bestandteil gemäß Anspruch 3 oder 4, wobei das vorherige Austenit eine Korngröße von maximal 15 µm aufweist.

6. CVT/IVT-Bestandteil gemäß einem der vorhergehenden Ansprüche, wobei der Bestandteil eine CVT/IVT-Scheibe umfasst.

7. CVT/IVT-Bestandteil gemäß einem der vorhergehenden Ansprüche, wobei die Komponente eine CVT/IVT-Walze umfasst.

## Revendications

1. Composant CVT/IVT comprenant un chemin de roulement venant en contact, en service, avec le chemin de roulement d'un autre composant CVT/IVT, **caractérisé en ce que** ledit composant comprend un acier se composant :
de 0,85 à 0,95 % en poids de C,
jusqu'à 0,15 % en poids de Si,
de 1,30 à 1,50 % en poids de Cr,
de 0,25 à 0,45 % en poids de Mn,
de 0,20 à O, 4 0 % en poids de Mo et
pour le reste, de fer et d'impuretés inévitables.

2. Composant CVT/IVT selon l'une quelconque des revendications précédentes, qui est carbonitruré.

3. Composant CVT/IVT. selon l'une quelconque des revendications précédentes, dans lequel la structure superficielle comprend une structure à plaques en martensite ayant de 0 à 35 % en volume d'austénite retenue et de 0 à 30 % en volume de carbure résiduel.

4. Composant CVT/IVT selon la revendication 3, dans lequel le carbure résiduel a un diamètre équivalent maximal de 4 µm.

5. Composant CVT/IVT selon la revendication 3 ou 4, dans lequel l'austénite antérieure a une taille de grain de 15 µm au maximum.

6. Composant CVT/IVT selon l'une quelconque des revendications précédentes, dans lequel ledit composant comprend un disque CVT/IVT.

7. Composant CVT/IVT selon l'une quelconque des revendications précédentes, dans lequel ledit composant comprend un rouleau CVT/IVT.
